# EUROPEAN PATENT APPLICATION

(11) **EP 3 059 812 A1**
(43) Date of publication of application: **24.08.2016**
(21) Application number: 15830971.6
(22) Date of filing: 05.11.2015
(51) Int. Cl.: H01R 13/66, H01R 13/713

(54) **METHOD AND DEVICE FOR CONTROLLING SWITCH OF SOCKET**

(30) Priority: 26.12.2014 CN 201410835843
(71) Applicant: Xiaomi Inc., Beijing 100085 (CN)
(72) Inventor: LIU, Xin, Beijing 100085 (CN); LIANG, Yue, Beijing 100085 (CN); HOU, Enxing, Beijing 100085 (CN)
(74) Representative: Robson, Aidan John
(86) International application number: PCT/CN2015/093904
(87) International publication number: WO 2016/101713

(57) **Abstract**

The present disclosure relates to a method and a device for switching on or off a socket. The method includes: judging whether a processor of the socket is restarted after being powered off; setting a state of the socket as an off state when the processor is restarted after being powered off. The present disclosure is used to adjust the state of the socket.

## Description

### CROSS-REFERENCE TO RELATED APPLICATIONS

This is based upon and claims priority to Chinese Patent Application No. 201410835843.3, filed on December 26, 2014, the entire contents of which are incorporated herein by reference.

### TECHNICAL FIELD

The present disclosure generally relates to a technical field of power control, and more particularly, to a method and an apparatus for switching on or off a socket.

### BACKGROUND

A smart socket, as a simple and useful smart product, has been introduced into homes of the majority of users more and more widely. The smart socket is gradually replacing the conventional socket to be an important component in a daily life of the user and changing a lifestyle of the user slowly. Due to a special use of the smart socket, each electric equipment (such as an electric cooker and a water heater) connected with the socket is in a normally on state, and an on-off function of an electric appliance is performed by the smart socket.

### SUMMARY

Accordingly, embodiments of the present disclosure provide a method and a device for switching on or off a socket.

According to a first aspect of embodiments of the present disclosure, there is provided a method for switching on or off socket, including:
judging whether a processor of the socket is restarted after being powered off;
setting a state of the socket as an off state when the processor is restarted after being powered off.

In the embodiment, in order to avoid an accident from occurring, such as damage to an electric appliance and a fire hazard, when power is restored again after an unexpected power outage, the state of the socket is set as the off state, so as to ensure safety of the electric appliance connected with the socket, thus removing hidden dangers of the fire hazard.

Optionally, judging whether a processor of the socket is restarted after being powered off comprises:
detecting a supply voltage of the socket;
determining whether the processor of the socket is restarted after being powered off according to a change in the supply voltage.

In optional embodiments, it is judged whether the processor of the socket is restarted after being powered off according to the change in the supply voltage, when the unexpected power outage occurs, the supply voltage of the socket is reduced to zero; when the power is restored again, the supply voltage recovers to a normal value gradually. Thus, further according to the change in the supply voltage, it is determined whether the processor of the socket is restarted after being powered off more accurately, thereby further improving an accuracy of adjusting the state of the socket.

Optionally, when the processor of the socket is restarted after being powered off, the method further includes:
sending an abnormal message to a network, in which the abnormal message at least comprises data identifying that the processor of the socket is restarted after being powered off, and the network transmits the abnormal message to a predetermined terminal.

In optional embodiments, when the power is restored again after the unexpected power outage occurs, the socket further transmits a condition that the processor is restarted after being powered off to the predetermined terminal via the network, so that a user can be informed of an occurrence of the unexpected power outage accurately in time and the user can process the unexpected power outage correspondingly, so as to ensure the safety of the electric appliance and remove the hidden dangers of fire hazard.

Optionally, after setting a state of the socket as an off state, the method further includes:
receiving a switching-on instruction transmitted by the network, in which the switching-on instruction is generated according to a user operation and sent to the network after the predetermined terminal presents the abnormal message;
setting the state of the socket as an on state according to the switching-on instruction.

In optional embodiments, when determining that the abnormal power outage is non-hazardous, the user may send the switching-on instruction to the socket via the network to switch on the socket, so that the electric appliance connected with the socket can continue operating.

Optionally, when the processor of the socket is restarted after being powered off, the method further includes:
obtaining an identification of the socket;
generating the abnormal message, in which the abnormal message further includes the identification of the socket.

In optional embodiments, by adding the identification of the socket into the abnormal message, the user can determine which socket to be switched on more accurately, so as to improve the safety and ensure that the essential electric appliance can operate normally at the same time, thus resulting in a great user experience.

Optionally, after setting a state of the socket as an off state, the method further includes:
obtaining the state of the socket before being powered off;
setting the state of the socket as an on state when the state of the socket before being powered off is the on state.

In optional embodiments, the state of the switch before being powered off may be recorded in the socket, if the state of the socket before being powered off is the on state, the socket may be switched on again after the power is restored again. Thus, the safety is improved and it is ensured that the essential electric appliance can operate normally at the same time, thereby resulting in a great user experience.

According to a second aspect of embodiments of the present disclosure, there is provided a device for switching on or off a socket, including:
a judging module, configured to judge whether a processor of the socket is restarted after being powered off;
a control module, configured to set a state of the socket as an off state when the processor is restarted after being powered off.

Optionally, the judging module includes:
a detecting sub module, configured to detect a supply voltage of the socket;
a determining sub module, configured to determine whether the processor of the socket is restarted after being powered off according to a change in the supply voltage.

Optionally, the device further includes:
a sending module, configured to send an abnormal message to a network when the processor of the socket is restarted after being powered off, in which the abnormal message at least comprises data identifying that the processor of the socket is restarted after being powered off, and the network transmits the abnormal message to a predetermined terminal.

Optionally, the device further includes:
a receiving module, configured to receive a switching-on instruction transmitted by the network after the state of the socket is set as the off state, in which the switching-on instruction is generated according to a user operation and sent to the network after the predetermined terminal presents the abnormal message;
in which the control module is configured to set the state of the socket as an on state according to the switching-on instruction.

Optionally, the device further includes:
a first obtaining module, configured to obtain an identification of the socket when the processor of the socket is restarted after being powered off;
a generating module, configured to generate the abnormal message, in which the abnormal message further comprises the identification of the socket.

Optionally, the device further includes:
a second obtaining module, configured to obtain a state of the socket before being powered off after the state of the socket is set as the off state;
in which the control module is configured to set the state of the socket as an on state when the state of the socket before being powered off is the on state.

According to a third aspect of embodiments of the present disclosure, there is provided a device for switching on or off a socket, including:
a processor; and
a memory for storing instructions executable by the processor;
in which the processor is configured to:
   judge whether a processor of the socket is restarted after being powered off;
   set a state of the socket as an off state when the processor is restarted after being powered off.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for switching on or off a socket, according to an illustrative embodiment.
Fig. 2 is a flow chart showing a method for switching on or off a socket, according to another illustrative embodiment.
Fig. 3 is a flow chart showing a method for switching on or off a socket, according to another illustrative embodiment.
Fig. 4 is a flow chart showing a method for switching on or off a socket, according to another illustrative embodiment.
Fig. 5 is a flow chart showing a method for switching on or off a socket, according to another illustrative embodiment.
Fig. 6 is a flow chart showing a method for switching on or off a socket, according to another illustrative embodiment.
Fig. 7 is a schematic diagram of presenting an abnormal message in a predetermined terminal according to an illustrative embodiment.
Fig. 8 is a block diagram of a device for switching on or off a socket according to an illustrative embodiment.
Fig. 9 is a block diagram of a judging module according to an illustrative embodiment.
Fig. 10 is a block diagram of a device for switching on or off a socket according to another illustrative embodiment.
Fig. 11 is a block diagram of a device for switching on or off a socket according to another illustrative embodiment.
Fig. 12 is a block diagram of a device for switching on or off a socket according to another illustrative embodiment.
Fig. 13 is a block diagram of a device for switching on or off a socket according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with aspects related to the present disclosure.

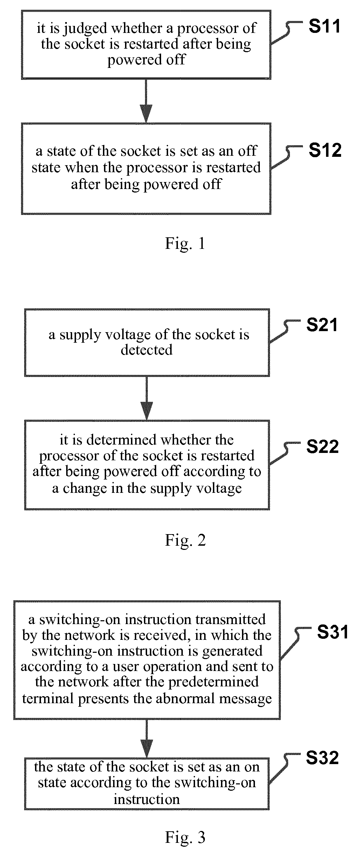

Fig. 1 is a flow chart of a method for switching on or off a socket, according to an illustrative embodiment. Referring to Fig 1, the method for switching on or off the socket is used in the socket and includes the following steps.
In step S11, it is judged whether a processor of the socket is restarted after being powered off.
In step S12, a state of the socket is set as an off state when the processor is restarted after being powered off.

In the embodiment, if the state of the socket is an on state when the power is restored again after an unexpected power outage, an electric appliance connected with the socket will be energized, and thus the electric appliance may operate for a long period of time without being known by a user, which may cause damage to the electric appliance and even result in a serious accident such as a fire hazard. In order to avoid the accident from occurring, such as the damage to the electric appliance and the fire hazard, when the power is restored again after the unexpected power outage, the state of the socket is set as the off state, so as to ensure safety of the electric appliance connected with the socket, thus removing hidden dangers of the fire hazard.

In addition, it is determined whether the power is restored again after the unexpected power outage according to whether the processor is restarted after being powered off. Only when the unexpected power outage occurs, the processer can be powered off, and when the power is restored again, the processor can be restarted. If the user switches off the socket by himself/herself, a condition in which the processor is restarted after being powered off will not occur. Thus, it can be judged whether the socket is abnormal more accurately, so that the state of the socket can be adjusted more accurately, which satisfies actual situations better.

Fig. 2 is a flow chart showing a method for switching on or off a socket, according to another illustrative embodiment. As shown in Fig. 2, optionally, step S11 includes following steps.
In step S21, a supply voltage of the socket is detected.
In step S22, it is determined whether the processor of the socket is restarted after being powered off according to a change in the supply voltage.

In optional embodiments, it is judged whether the processor of the socket is restarted after being powered off according to the change in the supply voltage, when the unexpected power outage occurs, the supply voltage of the socket is reduced to zero; when the power is restored again, the supply voltage recovers to a normal value gradually. Thus, further according to the change in the supply voltage, it is determined whether the processor of the socket is restarted after being powered off more accurately, thereby further improving an accuracy of adjusting the state of the socket.

Optionally, when the processor of the socket is restarted after being powered off, the method further includes a following step.

An abnormal message is sent to a network, in which the abnormal message at least includes data identifying that the processor of the socket is restarted after being powered off, and the network transmits the abnormal message to a predetermined terminal.

In optional embodiments, when the power is restored again after the unexpected power outage occurs, the socket further transmits a condition that the processor is restarted after being powered off to the predetermined terminal via the network, so that a user can be informed of an occurrence of the unexpected power outage accurately in time and the user can process the unexpected power outage correspondingly, so as to ensure the safety of the electric appliance and remove the hidden dangers of fire hazard.

Fig. 3 is a flow chart showing a method for switching on or off a socket, according to another illustrative embodiment. As shown in Fig. 3, when the processor is restarted after being powered off, the method further includes following steps.
In step S31, a switching-on instruction transmitted by the network is received, in which the switching-on instruction is generated according to a user operation and sent to the network after the predetermined terminal presents the abnormal message.
In step S32, the state of the socket is set as an on state according to the switching-on instruction.

In optional embodiments, when determining that the abnormal power outage is non-hazardous, the user may send the switching-on instruction to the socket via the network to switch on the socket, so that the electric appliance connected with the socket can continue operating.

For example, the electric appliance connected with the socket may be a refrigerator in home. When the power is restored again after the power outage, the user may determine that switching on the socket again is non-hazardous and send the switching on instruction to the socket via the terminal, so as to switch on the socket. Thus, the refrigerator is energized and operates normally, so as to ensure that the food in the refrigerator will not go bad.

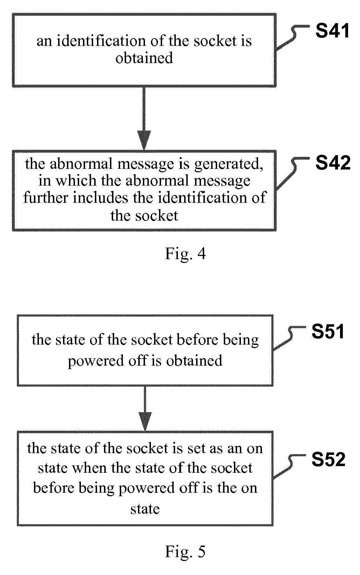

Fig. 4 is a flow chart showing a method for switching on or off a socket, according to another illustrative embodiment. As shown in Fig. 4, optionally, when the processor is restarted after being powered off, the method further includes following steps.
In step S41, an identification of the socket is obtained.
In step S42, the abnormal message is generated, in which the abnormal message further includes the identification of the socket.

In optional embodiments, there may be a plurality of sockets in home, and each socket may be connected with one or more different electric appliances. For example, socket A is connected with the refrigerator, socket B is connected with an air-conditioner, and socket C is connected with a microwave oven and a baker. When the power is restored again after the power outage, each socket sends the abnormal message to the predetermined terminal U1 of the user, and the abnormal message includes the identification of each socket. The user may determine what the electric appliance connected with the socket is according to the identification of the socket and whether to switch on the sockets connected with these electric appliances. For above three kinds of sockets, the user may determine to switch on socket A to ensure the refrigerator to operate normally; the user may determine to keep socket B and socket C in the off state to ensure the safety of the electric appliances and to avoid the accident from occurring. Thus, by adding the identification of the socket into the abnormal message, the user can determine which socket to be switched on more accurately, so as to improve the safety and ensure that the essential electric appliance can operate normally at the same time, thus resulting in a great user experience.

Fig. 5 is a flow chart showing a method for switching on or off a socket, according to another illustrative embodiment. As shown in Fig. 5, optionally, after the state of the socket is set as the off state, the method further includes following steps.
In step S51, the state of the socket before being powered off is obtained.
In step S52, the state of the socket is set as an on state when the state of the socket before being powered off is the on state.

In optional embodiments, the state of the switch before being powered off may be recorded in the socket, if the state of the socket before being powered off is the on state, the socket may be switched on again after the power is restored again. Thus, the safety is improved and it is ensured that the essential electric appliance can operate normally at the same time, thereby resulting in a great user experience.

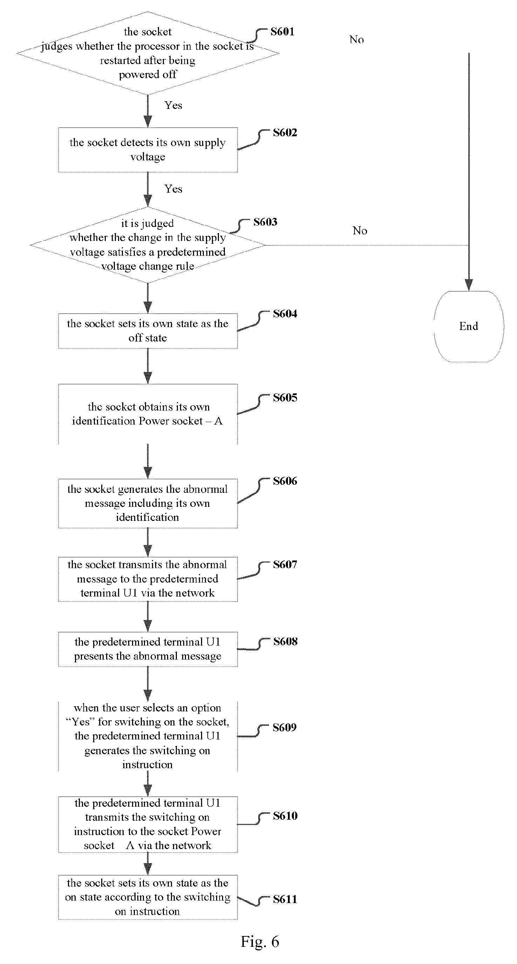

Fig. 6 is a flow chart showing a method for switching on or off a socket, according to another illustrative embodiment. As shown in Fig. 6, the method for switching on or off the socket includes following steps.
In step S601, the socket judges whether the processor in the socket is restarted after being powered off, if yes, step S602 is executed; if not, step S601 ends.
In step S602, the socket detects its own supply voltage.
In step S603, it is judged whether the change in the supply voltage satisfies a predetermined voltage change rule, if yes, step S604 is executed; if not, step S603 ends.
In step S604, the socket sets its own state as the off state.
In step S605, the socket obtains its own identification Power socket - A.
In step S606, the socket generates the abnormal message including its own identification.
In step S607, the socket transmits the abnormal message to the predetermined terminal U1 via the network.
In step S608, the predetermined terminal U1 presents the abnormal message.

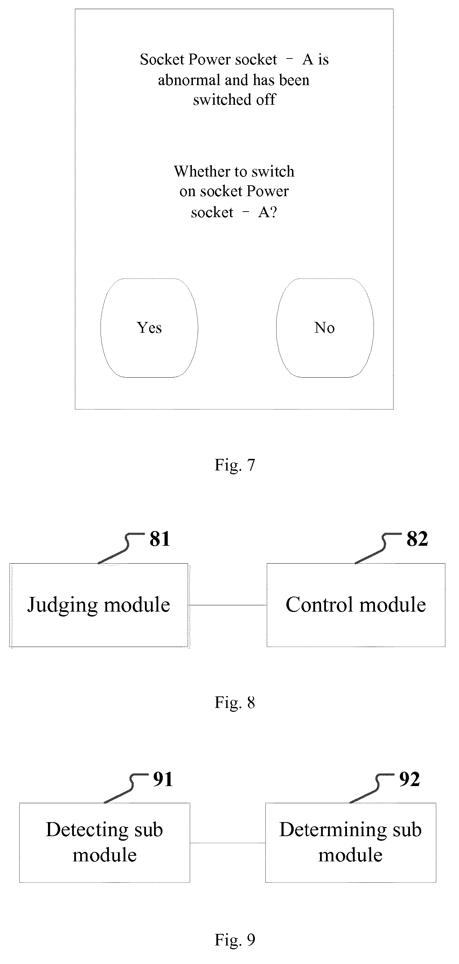

Fig. 7 is a schematic diagram of presenting an abnormal message in a predetermined terminal according to an illustrative embodiment. As shown in Fig. 7, it is displayed for the user that socket Power socket - A is abnormal, and options for whether to switch on the socket are provided for the user.
In step S609, when the user selects an option "Yes" for switching on the socket, the predetermined terminal U1 generates the switching on instruction.
In step S610, the predetermined terminal U1 transmits the switching on instruction to the socket Power socket - A via the network.
In step S611, the socket sets its own state as the on state according to the switching on instruction.

In the embodiment, when the power is restored again after the unexpected power outage occurs, the state of the socket is set as the off state, so as to ensure the safety of the electric appliance connected with the socket and remove the hidden dangers of fire hazard. Moreover, further according to the change in the supply voltage, it can be determined whether the processor of the socket is restarted after being powered off more accurately, thus further improving an accuracy of adjusting the state of the socket. In addition, when the power is restored again after the unexpected power outage occurs, the socket further transmits a condition that the processor is restarted after being powered off to the predetermined terminal via the network, so that a user can be informed of an occurrence of the unexpected power outage accurately in time and the user can process the unexpected power outage correspondingly, so as to ensure the safety of the electric appliance and remove the hidden dangers of fire hazard.

Fig. 8 is a block diagram of a device for switching on or off a socket according to an illustrative embodiment. As shown in Fig. 8, the device includes a judging module 81 and a control module 82.

The judging module 81 is configured to judge whether a processor of the socket is restarted after being powered off.

The control module 82 is configured to set a state of the socket as an off state when the processor is restarted after being powered off.

Fig. 9 is a block diagram of a judging module according to an illustrative embodiment. As shown in Fig. 9, optionally, the judging module 81 includes:
a detecting sub module 91, configured to detect a supply voltage of the socket;
a determining sub module 92, configured to determine whether the processor of the socket is restarted after being powered off according to a change in the supply voltage.

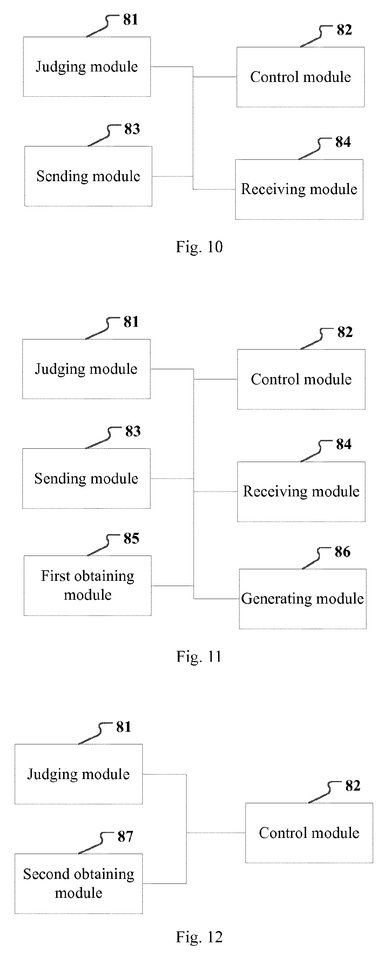

Fig. 10 is a block diagram of a device for switching on or off a socket according to another illustrative embodiment. As shown in Fig. 10, optionally, the device further includes:
a sending module 83, configured to send an abnormal message to a network when the processor of the socket is restarted after being powered off, in which the abnormal message at least includes data identifying that the processor of the socket is restarted after being powered off, and the network transmits the abnormal message to a predetermined terminal.

As shown in Fig. 10, optionally, the device further includes:
a receiving module 84, configured to receive a switching-on instruction transmitted by the network after the state of the socket is set as the off state, in which the switching-on instruction is generated according to a user operation and sent to the network after the predetermined terminal presents the abnormal message,
in which the control module 82 is configured to set the state of the socket as an on state according to the switching-on instruction.

Fig. 11 is a block diagram of a device for switching on or off a socket according to another illustrative embodiment. As shown in Fig. 11, the device further includes:
a first obtaining module 85, configured to obtain an identification of the socket when the processor of the socket is restarted after being powered off;
a generating module 86, configured to generate the abnormal message, in which the abnormal message further includes the identification of the socket.

Fig. 12 is a block diagram of a device for switching on or off a socket according to another illustrative embodiment. As shown in Fig. 12, the device further includes:
a second obtaining module 87, configured to obtain a state of the socket before being powered off after the state of the socket is set as the off state,
in which the control module 82 is configured to set the state of the socket as an on state when the state of the socket before being powered off is the on state.

With respect to the devices in the above embodiments, the specific manners for performing operations for individual modules therein have been described in detail in the embodiments regarding the methods for switching on or off the socket, which will not be elaborated herein.

The present disclosure further provides a device for switching on or off a socket, including:
a processor; and
a memory for storing instructions executable by the processor;
in which the processor is configured to:
   judge whether a processor of the socket is restarted after being powered off;
   set a state of the socket as an off state when the processor is restarted after being powered off.

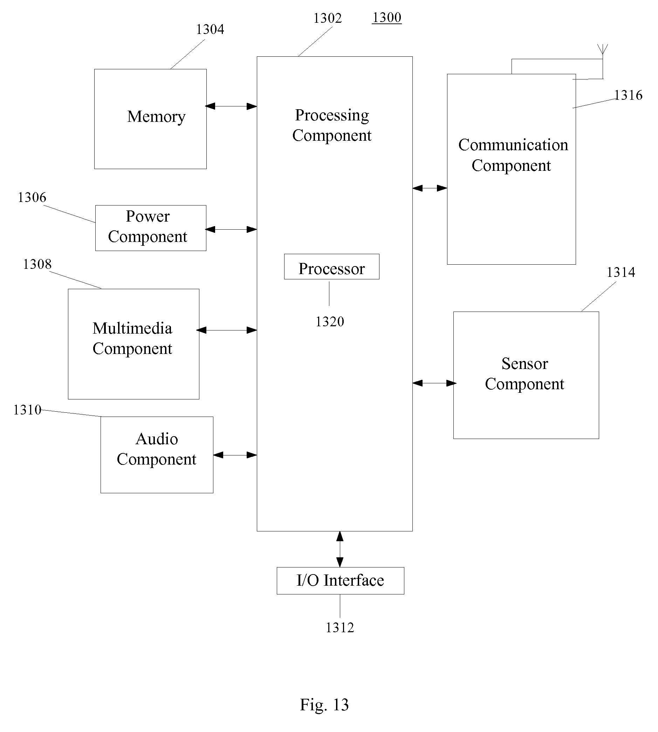

Fig. 13 is a block diagram of a device for switching on or off a socket according to an illustrative embodiment. For example, the device 1300 may be a smart socket.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the TP, the screen may be implemented as a touch screen to receive input signals from the user. The TP includes one or more touch sensors to sense touches, swipes, and gestures on the TP. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one illustrative embodiment, the communication component 1316 receives a broadcast signal or broadcast associated information from an external broadcast management system via a broadcast channel. In one illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer-readable storage medium is provided, having stored therein instructions that, when executed by a processor of a socket, causes the socket to perform a method for switching on or off the socket, in which the method includes:
judging whether a processor of the socket is restarted after being powered off;
setting a state of the socket as an off state when the processor is restarted after being powered off.

Optionally, judging whether a processor of the socket is restarted after being powered off includes:
detecting a supply voltage of the socket;
determining whether the processor of the socket is restarted after being powered off according to a change in the supply voltage.

Optionally, when the processor of the socket is restarted after being powered off, the method further includes:
sending an abnormal message to a network, in which the abnormal message at least comprises data identifying that the processor of the socket is restarted after being powered off, and the network transmits the abnormal message to a predetermined terminal.

Optionally, after setting a state of the socket as an off state, the method further includes:
receiving a switching-on instruction transmitted by the network, in which the switching-on instruction is generated according to a user operation and sent to the network after the predetermined terminal presents the abnormal message;
setting the state of the socket as an on state according to the switching-on instruction.

Optionally, when the processor of the socket is restarted after being powered off, the method further includes:
obtaining an identification of the socket;
generating the abnormal message, in which the abnormal message further comprises the identification of the socket.

Optionally, after setting a state of the socket as an off state, the method further includes:
obtaining the state of the socket before being powered off;
setting the state of the socket as an on state when the state of the socket before being powered off is the on state.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for switching on or off a socket, comprising:
judging whether a processor of the socket is restarted after being powered off;
setting a state of the socket as an off state when the processor is restarted after being powered off.

2. The method of claim 1, wherein judging whether a processor of the socket is restarted after being powered off comprises:
detecting a supply voltage of the socket;
determining whether the processor of the socket is restarted after being powered off according to a change in the supply voltage.

3. The method of claim 1, when the processor of the socket is restarted after being powered off, further comprising:
sending an abnormal message to a network, wherein the abnormal message at least comprises data identifying that the processor of the socket is restarted after being powered off, and the network transmits the abnormal message to a predetermined terminal.

4. The method of claim 3, after setting a state of the socket as an off state, further comprising:
receiving a switching-on instruction transmitted by the network, wherein the switching-on instruction is generated according to a user operation and sent to the network after the predetermined terminal presents the abnormal message;
setting the state of the socket as an on state according to the switching-on instruction.

5. The method of claim 4, when the processor of the socket is restarted after being powered off, further comprising:
obtaining an identification of the socket;
generating the abnormal message, wherein the abnormal message further comprises the identification of the socket.

6. The method of claim 1, after setting a state of the socket as an off state, further comprising:
obtaining the state of the socket before being powered off;
setting the state of the socket as an on state when the state of the socket before being powered off is the on state.

7. A device for switching on or off a socket, comprising:
a judging module, configured to judge whether a processor of the socket is restarted after being powered off;
a control module, configured to set a state of the socket as an off state when the processor is restarted after being powered off.

8. The device of claim 5, wherein the judging module comprises:
a detecting sub module, configured to detect a supply voltage of the socket;
a determining sub module, configured to determine whether the processor of the socket is restarted after being powered off according to a change in the supply voltage.

9. The device of claim 5, further comprising:
a sending module, configured to send an abnormal message to a network when the processor of the socket is restarted after being powered off, wherein the abnormal message at least comprises data identifying that the processor of the socket is restarted after being powered off, and the network transmits the abnormal message to a predetermined terminal.

10. The device of claim 9, further comprising:
a receiving module, configured to receive a switching-on instruction transmitted by the network after the state of the socket is set as the off state, wherein the switching-on instruction is generated according to a user operation and sent to the network after the predetermined terminal presents the abnormal message,
wherein the control module is configured to set the state of the socket as an on state according to the switching-on instruction.

11. The device of claim 10, further comprising:
a first obtaining module, configured to obtain an identification of the socket when the processor of the socket is restarted after being powered off;
a generating module, configured to generate the abnormal message, wherein the abnormal message further comprises the identification of the socket.

12. The device of claim 7, further comprising:
a second obtaining module, configured to obtain a state of the socket before being powered off after the state of the socket is set as the off state,
wherein the control module is configured to set the state of the socket as an on state when the state of the socket before being powered off is the on state.

13. A device for switching on or off a socket, comprising:
a processor; and
a memory for storing instructions executable by the processor,
wherein the processor is configured to:
judge whether a processor of the socket is restarted after being powered off;
set a state of the socket as an off state when the processor is restarted after being powered off.
